# EUROPÄISCHE PATENTANMELDUNG

(11) **EP 1 619 470 A2**
(43) Veröffentlichungstag der Anmeldung: **25.01.2006**
(21) Anmeldenummer: 05105322.1
(22) Anmeldetag: 16.06.2005
(51) Int. Cl.: G01C 15/00, G01C 15/02

(54) **Markierungsvorrichtung**

(30) Priorität: 22.07.2004 DE 102004035521
(71) Anmelder: ROBERT BOSCH GMBH, 70442 Stuttgart (DE)
(72) Erfinder: Clauss, Stefan, 70771 Leinfelden-Echterdingen (DE)

(57) **Zusammenfassung**

Die Erfindung beschreibt eine Vorrichtung zum Anbringen einer Markierung auf einer Referenzfläche, mit einer Aufnahmeeinheit, in die ein Empfänger für ein Empfangssignal einsetzbar ist, sowie mit einer Markierungseinheit mit markierungsgebenden Mitteln zur Erzeugung einer Markierung auf einer Referenzfläche.

## Beschreibung

### Stand der Technik

Um im Bereich des Innenausbaus sowie allgemein auf Baustellen beispielsweise horizontale oder vertikale Markierungen setzen zu können, werden sogenannte Rotationsbaulaser verwendet. Diese Geräte nivellieren sich durch eine Sensoreinheit entweder selbst, oder müssen durch den Anwender ausnivelliert werden. Ein solcher Rotationsbaulaser weist im wesentlichen einen rotierenden Laser, bzw. einen rotierenden Laserstrahl, zumeist im sichtbaren Bereich, bei einer Wellenlänge von ca. 635 bis 650 nm auf. Durch die Rotation des Lasersignals erzeugt der Rotationsbaulaser je nach Ausrichtung eine horizontale oder vertikale Ebene, die an Wänden, Decken oder Böden ein vorgebbares Niveau markiert.

Aus Gefährdungs- bzw. Sicherheitsgründen darf ein solcher Laser nur eine bestimmte Ausgangsleistung haben, was zu einer Beeinträchtigung seiner Sichtbarkeit, insbesondere bei entsprechend großen Entfernungen der zu nivellierenden Ebene vom Baulaser führt. Der rotierende und damit aufgefächerte, prinzipiell sichtbare Laserstrahl ist somit schon im Abstand von einigen wenigen Metern nur noch schwerlich an einer Wand zu erkennen. Für diesen Fall sind sogenannte Laserdetektionsgeräte auch Receiver genannt, bekannt. Trifft das rotierende Lasersignal auf ein Empfangsfeld eines solchen Receivers, wird dem Anwender zumeist durch Licht- oder andere Anzeigeelemente gezeigt, in welche Richtung er den Receiver verschieben muss, damit das rotierende Lasersignal durch eine Referenzmarkierung des Receivers läuft. Ist der Receiver auf diese Weise auf die vom Rotationsbaulaser aufgespannte Referenzfläche ausgerichtet worden, kann beispielsweise eine Referenzmarkierung am Receiver genutzt werden um entsprechende Markierungen auf eine Referenzfläche, beispielsweise eine Wand, per Hand zu übertragen. Das Anzeichnen der Markierungen auf die Referenzfläche wird dabei vom Anwender selbst übernommen.

Aus der DE 38 33 153 ist ein Verfahren zum Erfassen des Zentrums eines von einem Nivelliergerät, d. h. einem Baulaser projizierten Laserstrahls mittels mindestens zweier spiegelbildlich zu einer Null-Linie angeordneten laserempfindlichen, signalgebenden Empfangselementen bekannt. Die selbstjustierende Empfangsvorrichtung der DE 38 33 153 A1 weist eine Mehrzahl von Fotodioden auf, die es ermöglichen, dass bei Auftreffen des Laserstrahls auf irgend eine der Fotodioden oberhalb oder unterhalb der Null-Linie ein Steuersignal erzeugt wird, welches einen Schlitten, auf dem die Fotodioden spiegelbildlich zu der festgelegten Null-Linie angeordnet sind, solange automatisch in der einen oder anderen Richtung verschoben wird, bis das Zentrum des projizierten Laserstrahls genau in Höhe der Null-Linie auftrifft und die Empfangsvorrichtung somit einjustiert ist. Dieser Einjustierungszustand wird optisch durch eine Leuchtdiode oder akustisch durch einen Summer angezeigt. Rechtwinklig zur Verschiebungsrichtung des Schlittens ist an der Vorrichtung der DE 38 33 153 A1 ein Anreißlineal so angeordnet, dass dessen Oberkante genau auf Höhe der Null-Linie liegt und als Anreißkante dient, so dass nach Erreichen des Einjustierungszustands das vom projizierten Laserstrahl übertragene Null-Niveau auf der Wand vom Anwender angerissen werden kann.

### Vorteile der Erfindung

Die erfindungsgemäße Vorrichtung zum Aufbringen einer Markierung auf einer Referenzfläche besitzt demgegenüber eine Aufnahmeeinheit, in die ein Empfänger oder Receiver für ein Empfangssignal einsetzbar ist. In vorteilhafter Weise besitzt die Vorrichtung darüber hinaus eine Markierungseinheit, welche markierungsgebende Mittel zur Erzeugung einer Markierung auf der Referenzfläche aufweist. Auf diese Weise ist es möglich, mit lediglich einer Hand die Vorrichtung und damit einen in die Aufnahmeeinheit der Vorrichtung eingesetzten Empfänger in eine Referenzebene einzujustieren und gleichzeitig dann diese Referenzebene über die Markierungseinheit der Vorrichtung auf eine Referenzfläche zu übertragen. Der Anwender ist somit nicht mehr gezwungen, zum Ausnivellieren des Empfängers und zum Markieren der Referenzebene an einer Wand beide Hände zu nutzen. Insbesondere lässt sich die erfindungsgemäße Vorrichtung in vorteilhafter Weise für solche Anwendungsfälle nutzen, in denen entweder aus Sicherheitsgründen, wie beispielsweise auf Leitern oder aus ergonomischen Gründen, wie beispielsweise in einer Raumecke sich die Nutzung beider Hände zum Ausnivellieren des Empfängers und zum nachfolgenden Markieren an der Wand verbietet.

In vorteilhafter Weise ist der Empfänger für ein Empfangssignal in die erfindungsgemäße Vorrichtung einsetzbar. Auf diese Weise ist es möglich, eine Vorrichtung zu realisieren, welche Markierungen an eine Wand übertragen kann und gleichzeitig für verschiedene Empfänger geeignet ist. Die Vorrichtung dient somit zusätzlich als Adapter für eine Viezahl von Typen von Empfänger bzw. Receiver eines Empfangssignals.

Vorteilhafte Ausführungsformen und Weiterbildungen der erfindungsgemäßen Vorrichtung gemäß Anspruch 1 ergeben sich aus den in den Unteransprüchen aufgeführten Merkmalen.

In einer vorteilhaften Ausführungsform der erfindungsgemäßen Vorrichtung ist der Empfänger in die Aufnahmeeinheit der Vorrichtung einschieb- oder einklipsbar. Der Empfänger wird dabei in einer speziellen Position in der Aufnahmeeinheit der Vorrichtung fixiert.

In vorteilhafter Weise besitzt die Markierungseinheit der erfmdungsgemäßen Vorrichtung Markierungsmittel, die es ermöglichen eine Markierung auf einer Referenzfläche zu erzeugen, wobei die Markierungsmittel relativ zur Aufnahmeeinheit der Vorrichtung und/oder zu einem in die Aufnahmeeinheit eingesetzten Empfänger positionierbar sind. Auf diese Weise ist es möglich, die Markierungsmittel in einer Ebene mit einer Empfangs- oder Referenzebene des Empfängers bzw. Receivers auszurichten. Derart wird sichergestellt, dass die von den Markierungsmitteln auf eine Referenzfläche übertragene Markierung in der vom Empfangssignal aufgespannten Referenzebene liegt.

Des weiteren verfügt die Vorrichtung über Mittel, die es ermöglichen, die Markierungsmittel der Vorrichtung zu aktivieren, falls das Empfangssignal in einer Referenz- bzw. Empfangsebene des Empfängers auftrifft.

In einer vorteilhaften Ausführungsform der erfindungsgemäßen Vorrichtung werden diese Mittel automatisch aktiviert, falls das Empfangssignal in der Empfangs- bzw. Referenzebene des Empfängers auftrifft. Auf diese Weise muss ein Anwender die Vorrichtung und damit den in die Aufnahmeeinheit der Vorrichtung eingesetzten Empfänger lediglich in die vom Empfangssignal aufgespannte Referenzebene einjustieren. Ist diese Justage erfolgt, so bringt die erfindungsgemäße Vorrichtung selbsttätig eine Markierung, welche in der vom Empfangssignal aufgespannten Referenzebene liegt, auf einer Referenzfläche, beispielsweise einer Wand auf.

In einer alternativen Ausführungsform der erfindungsgemäßen Vorrichtung sind die Mittel zur Aktivierung der Markierungsmittel manuell betrieben. Dabei wird vom Nutzer ein Schalter oder Taster betätigt, sobald er von der Vorrichtung ein Signal erhält, dass die Vorrichtung in die gewünschte Referenzebene einjustiert ist.

Die erfindungsgemäße Vorrichtung ermöglicht es mit Hilfe der Markierungsmittel eine Farb- oder Druckmarkierung auf einer Referenzfläche aufzubringen, wobei diese Markierung in einer von einem Empfangssignal des Empfängers der Vorrichtung aufgespannten Ebene liegt.

Der in die erfindungsgemäße Vorrichtung einsetzbare Empfänger, kann beispielsweise ein optischer Empfänger in Form einer oder mehrer Fotodioden oder eines Flächendetektors, beispielsweise eines CCD-Detektors sein. In diesem Fall wird das Empfangssignal ebenfalls durch ein optisches Signal gebildet, welches beispielsweise durch einen Laser, beispielsweise einen Rotationslaser erzeugt wird. Mit Hilfe der erfindungsgemäßen Vorrichtung ist es somit möglich, eine vom Rotationslaser aufgespannte Ebene auf eine Referenzfläche, beispielsweise eine Wand, einen Boden oder eine Decke zu übertragen.

Neben optischen Empfängern sind jedoch auch alle anderen Empfänger für die erfindungsgemäße Vorrichtung denk- und einsetzbar. Insbesondere kann ein solcher Empfänger beispielsweise auch ein Ortungsgerät, beispielsweise ein Metallortungsgerät oder ein, einem Metallortungsgerät zugeordneter Transponder sein. Das Empfangssignal wird in dieser Ausführungsform durch das Detektionssignal gebildet, so dass es die erfindungsgemäße Vorrichtung ermöglicht, ein beispielsweise in einer Wand eingeschlossenen Metallgegenstand zu orten und dessen Position direkt auf der Wand anzuzeichnen.

Die erfindungsgemäße Vorrichtung ermöglicht es, Markierungen auf einer Referenzfläche, beispielsweise einer Wand zu erzeugen wobei die Vorrichtung für eine Vielzahl von Empfängertypen geeignet ist. Insbesondere ermöglicht es die erfindungsgemäße Vorrichtung derartige Markierungen auf einer Wand anzubringen, ohne dass ein Anwender dazu beide Hände nutzen müsste, was in speziellen Anwendungsfällen als nachteilig angesehen wird.

Weitere Vorteile der erfindungsgemäßen Vorrichtung ergeben sich aus der nachfolgenden Beschreibung eines Ausführungsbeispiels.

### Beschreibung eines Ausführungsbeispiels

Die Beschreibung eines Ausführungsbeispiels sowie die auf den erfindungsgemäßen Gegenstand gerichteten Ansprüche enthalten zahlreiche Merkmale in Kombination. Ein Fachmann wird diese Merkmale auch einzeln betrachten und zu weiteren, sinnvollen Kombinationen zusammenfassen, die somit als ebenfalls offenbart anzusehen sind.

In der erfindungsgemäßen Vorrichtung ist eine Aufnahme bzw. Aufnahmeeinheit vorgesehen, in die verschiedene Receiver, d. h. Empfänger für ein Empfangssignal in der richtigen Position entweder eingeklemmt oder beispielsweise auch eingeklipst werden können. Ein solcher Receiver weist ein Empfangsfeld, beispielsweise eine ein- oder zweidimensionale Anordnung von Fotozellen bzw. einen Flächendetektor auf, welches ein Ziel- oder Null-Niveau besitzt. Fällt ein Empfangssignal in die Zielebene des Receivers ein, so gibt dieser über ein optisches oder akustisches Signal dem Anwender zu verstehen, dass der Receiver in die vom Empfangssignal aufgespannte Ebene einjustiert ist.

Die Vorrichtung weist zudem eine Markierungseinheit auf, die Markierungsmittel besitzt, die relativ zur Aufnahmeeinheit und damit zu einem in die Aufnahmeeinheit eingesetzten Empfänger positionierbar sind. Somit kann sichergestellt werden, dass die Markierungsmittel in die Zielebene des Receivers einjustierbar sind. Zeigt die erfindungsgemäße Vorrichtung bzw. der in einer Aufnahmeeinheit der Vorrichtung eingesetzte Empfänger bzw. Receiver an, dass die Vorrichtung in die Ebene des Empfangssignals einjustiert ist, liegen somit auch automatisch die Markierungsmittel in der vom Empfangssignal aufgespannten Ebene. Über entsprechende Mittel können dann die Markierungsmittel der Vorrichtung aktiviert werden, um eine Markierung auf eine Referenzfläche, beispielsweise eine Wand zu übertragen. Diese Mittel können manuell ausgebildet sein und beispielsweise durch einen Drucktaster oder Schalter realisiert werden, welcher vom Anwender betätigt wird, falls die Vorrichtung signalisiert, dass diese in die vom Empfangssignal aufgespannte Ebene einjustiert ist. Es können jedoch auch automatische Mittel vorgesehen sein, die die Markierungsmittel automatisch dann aktivieren, falls die erfindungsgemäße Vorrichtung in die vom Empfangssignal aufgespannte Ebene einjustiert ist.

Eine Markierung kann dabei auf unterschiedlichste Art und Weise auf eine Referenzfläche, beispielsweise eine Wand aufgebracht werden. Die Markierungsmittel können beispielsweise als integrierter Stempel oder integrierter Tintenspritzer, der auf mechanischem, elektronischem, thermischem, pneumatischem oder piezokeramischem Wege, analog einem Tintenstrahldrucker eine entsprechende Markierung in Form eines Tintenkleckses oder einer Tintenlinie auf die gewünschte Position der Referenzfläche aufbringen kann, ausgebildet sein. Des weiteren kann beispielsweise auch ein Kreidestrich verwendet werden. Darüber hinaus können die erfindungsgemäßen Markierungsmittel auch durch ein Drucksystem beispielsweise mit Stiften realisiert werden, welches keinen Farbauftrag auf der Referenzfläche vornehmen, sondern einen mechanischen Abdruck der vom Empfangssignal aufgespannten Referenzebene auf der Referenzfläche hinterlassen.

Im Anwendungsfall befestigt der Anwender den Empfänger oder Receiver an oder in der erfindungsgemäßen Markierungsvorrichtung und sucht mit dem Receiver die Ebene des Empfangssignals. Dies kann insbesondere die von einem rotierenden Laser, insbesondere einem Baurotationslaser aufgespannte Ebene sein. Der in die erfindungsgemäße Vorrichtung eingesetzte Empfänger oder Receiver wird in die gewünschte Ebene einnivelliert und der Anwender kann nun beispielsweise durch einen Tastendruck die Markierungseinheit aktivieren und über markierungsgebende Mittel beispielsweise eine Gerade oder auch Punkte auf eine Wand zeichnen, die dem Schnitt der vom Rotationslaser aufgespannten Nivellierebene und der von der Wand aufgespannten Referenzfläche entspricht.

Die erfindungsgemäße Vorrichtung ermöglicht es in vorteilhafter Weise bereits bestehende Empfänger oder Receiver nachzurüsten. Dabei können diese Receiver in die erfindungsgemäße Vorrichtung in Art eines Adapters beispielsweise eingeschoben werden und somit nachträglich mit einer Markierungseinheit versehen werden. Die erfindungsgemäße Vorrichtung besitzt entsprechende Fixationsmittel, um auch Receiver unterschiedlicher Baugröße in der Aufnahme zu befestigen.

Durch ihre spezielle Formgebung und insbesondere durch die Ausgestaltung der Aufnahmeeinheit der erfindungsgemäßen Vorrichtung ist es daher möglich, eine Vielzahl von unterschiedlichen Receivern wahlweise in die Vorrichtung einzusetzen.

Die erfmdungsgemäße Vorrichtung ist nicht auf das Ausführungsbeispiel beschränkt.

Insbesondere ist die erfindungsgemäße Vorrichtung nicht beschränkt auf die Verwendung eines optischen Empfängers bzw. Receivers.

Die erfindungsgemäße Vorrichtung kann ebenfalls verwendet werden bei Empfängern, die beispielsweise als Metallortungsgerät, Infrarotortungsgerät, Radarortungsgerät oder kapazitiver Sensor ausgebildet sind.

## Patentansprüche

1. Vorrichtung zum Anbringen einer Markierung auf einer Referenzfläche, mit einer Aufnahmeeinheit, in die ein Empfänger für ein Empfangssignal einsetzbar ist, sowie mit einer Markierungseinheit mit markierungsgebenden Mitteln zur Erzeugung einer Markierung auf der Referenzfläche.

2. Vorrichtung nach Anspruch 1, **dadurch gekennzeichnet, dass** die Markierungseinheit Markierungsmittel besitzt, die relativ zur Aufnahmeeinheit und / oder zu einem in die Aufnahmeeinheit eingesetzten Empfänger positionierbar sind.

3. Vorrichtung nach Anspruch 2, **dadurch gekennzeichnet, dass** die Markierungsmittel in eine Empfangsebene des Empfängers positionierbar sind.

4. Vorrichtung nach Anspruch 3, **dadurch gekennzeichnet, dass** Mittel vorgesehen sind, die es ermöglichen, die Markierungsmittel der Vorrichtung zu aktivieren, falls das Empfangssignal in einer Referenzebene des Empfängers auftrifft.

5. Vorrichtung nach Anspruch 4, **dadurch gekennzeichnet, dass** die Mittel automatisch aktiviert sind, falls das Empfangssignal in der Referenzebene des Empfängers auftrifft.

6. Vorrichtung nach Anspruch 3, **dadurch gekennzeichnet, dass** Mittel vorgesehen sind, die es ermöglichen, die Markierungsmittel der Vorrichtung manuell zu aktivieren.

7. Vorrichtung nach einem der Ansprüche 2 bis 6, **dadurch gekennzeichnet, dass** die Markierungsmittel es ermöglichen, eine Farb- oder Druckmarkierung auf der Referenzfläche aufzubringen.

8. Vorrichtung nach Anspruch 1, **dadurch gekennzeichnet, dass** der Empfänger in der Aufnahmeeinheit fixierbar ist.

9. Vorrichtung nach Anspruch 8, **dadurch gekennzeichnet, dass** der Empfänger in die Aufnahmeeinheit einclipsbar ist.

10. Vorrichtung nach einem der vorhergehenden Ansprüche, **dadurch gekennzeichnet, dass** der Empfänger ein optischer Empfänger ist.
